# EUROPÄISCHE PATENTANMELDUNG

(11) **EP 4 035 759 A1**
(43) Veröffentlichungstag der Anmeldung: **03.08.2022**
(21) Anmeldenummer: 21154198.2
(22) Anmeldetag: 29.01.2021
(51) Int. Cl.: B01D 53/00, C10L 3/10, F25J 1/00, F25J 3/06, B01D 53/22

(54) **VERFAHREN ZUM ENTFERNEN VON CO2 AUS EINEM METHANHALTIGEN GAS**

(71) Anmelder: Hitachi Zosen Inova AG, 8005 Zürich (CH)
(72) Erfinder: JORDAN, Uwe, 27726 Worpswede (DE); VÖLLMY, Lukas, 8005 Zürich (CH); HACK, Gamuret, 8005 Zürich (CH)
(74) Vertreter: Schaad, Balass, Menzl & Partner AG

(57) **Zusammenfassung**

Die Erfindung betrifft ein Verfahren zur Entfernung von CO₂ aus einem methanhaltigen Gas 103 umfassend das Bereitstellen eines methanhaltigen Gases 103 enthaltend mindestens CO₂ als Verunreinigung, die Abtrennung von CO₂ aus dem methanhaltigen Gas 103 mittels Ausfrierens und eine weitere Reduktion der CO₂-Konzentration des Gases 103 mittels einer Trennvorrichtung 111, wodurch ein Methan-angereichertes Produktgas 117 erhalten wird. Anschliessend wird mindestens eines Teils 127 des Produktgases 117 als Aufbereitungsgas 129 durch die Trennvorrichtung 111 geleitet, wodurch CO₂ vom Aufbereitungsgas 129 aufgenommen und aus der Trennvorrichtung 111 entfernt wird, wobei anschliessend das durch die Trennvorrichtung 111 geleitete Aufbereitungsgases dem methanhaltigen Gas 103 beigemischt wird.

## Beschreibung

Die Erfindung betrifft ein Verfahren und eine Vorrichtung zum Entfernen von CO₂ aus einem methanhaltigen Gas.

Aufgrund der Klimaerwärmung werden CO₂-neutrale Energieträger immer wichtiger für die heutige Gesellschaft. Ein beliebtes Verfahren zur Gewinnung eines solchen Energieträgers ist die Vergärung von Lebensmittelabfällen in Fermentern zur Erzeugung von Biogas. Da Lebensmittel wie Früchte oder Gemüse während des Wachstums CO₂ aus der Atmosphäre binden, ist das bei der Vergärung dieser Lebensmittel entstehende Biogas und das darin enthaltene Methan Klima neutral.

Biogas enthält für gewöhnlich neben Methan auch verschiedene Verunreinigungen, mitunter nennenswerte Anteile an CO₂. Da CO₂ nicht brennbar ist, behindert dessen Anwesenheit im Biogas ein effizientes Verbrennen des Methans und senkt die Energiedichte des Biogases. Aus diesem Grund wird fermentativ erzeugtes Biogas für gewöhnlich aufgereinigt, um den Methan-Gehalt zu erhöhen. Das nach der Aufreinigung erhaltene Methanangereicherte Produktgas - oft auch Biomethan genannt - kann entweder zwecks Energiegewinnung direkt genutzt, ins Gasnetz eingespiesen oder im Hinblick auf eine Zwischenspeicherung oder den Transport verflüssigt werden.

Zur Verflüssigung wird das Produktgas üblicherweise stark heruntergekühlt und/oder komprimiert. Bei diesem Prozess wirken sich im Produktgas enthaltene Verunreinigungen, insbesondere auch CO₂, nachteilig aus: Wenn im Produktgas eine nennenswerte CO₂-Kontentration enthalten ist, so gefriert dieses im Zuge der für die Verflüssigung notwendige Kühlung aus und kann dabei Ventile der Verflüssigungsanlage blockieren. Insofern ist eine möglichst geringe CO₂-Konzentration im Produktgas nicht nur im Hinblick auf dessen Nutzung als Energieträger, sondern auch im Hinblick auf dessen Verflüssigung zur Lagerung bzw. zum Transport wünschenswert. Es hat sich gezeigt, dass im Falle einer Verflüssigung eine CO₂-Konzentration im Produktgas von unter 215 ppm ideal ist. Solch tiefe CO₂-Konzentrationen können mit den bekannten Methoden allerdings - wenn überhaupt - nur durch Einsatz von zeit- und kostenintensiven Aufreinigungsprozessen erreicht werden.

Für die Entfernung bzw. Reduktion von CO₂ aus Biogas sind verschiedene Trennverfahren und Trennvorrichtungen, wie Aminwäschen, Druck-Wechsel-Adsorption ("Pressure Swing Adsorption - kurz: "PSA"), Druck-Temperatur-Wechsel-Adsorption ("Pressure Thermal Swing Adsorption" - kurz: "PTSA") oder Membranen, bekannt. Viele dieser Verfahren haben den Nachteil, dass die involvierten Trennvorrichtungen (Membrane, Adsorber, Filter) aufwändig wiederaufbereitet bzw. regeneriert oder gewechselt werden müssen, da ihre Trennleistung ohne Regeneration stetig abnimmt. Zudem sind oftmals mehrstufige Verfahren - d.h. hintereinandergeschaltete Trennvorrichtungen oder Trennschritte - notwendig, um eine signifikante CO₂-Reduktion im Produktgas zu erreichen. Jede Trennstufe geht gewöhnlich mit zusätzlichen Kosten und Verlust an Produktgas (dem sogenannten "Methanschlupf") einher. Diese Probleme sind in den heutigen Verfahren nach wie vor präsent.

Die US 2019/0001263 A1 beschreibt beispielsweise ein Verfahren zur Herstellung von Biomethan, bei dem das zu reinigende Gasgemisch in einem ersten Schritt komprimiert wird und in einem zweiten Schritt gasförmige Verunreinigungen (volatile organic compounds - VOC) mittels einer PSA aus dem Gasgemisch entfernt werden. Anschliessend wird in einem dritten Schritt mittels einer Membran ein Teil des CO₂ und Sauerstoff aus dem Gasgemisch abgetrennt. Eine weitere CO₂-Reduktion wird in einem vierten Schritt mittels einer PTSA erreicht, während restlicher Sauerstoff und Stickstoff durch eine cryogene Separation in einem fünften Schritt entfernt werden. Am Ende dieses aufwändigen Prozesses wird ein Methan-angereichertes, gereinigtes Produktgas, bzw. Biomethan erhalten. Für die Regeneration der PTSA wird in bekannter Manier ein methanhaltiges Regenerationsgas durch die PTSA geleitet, welches anschliessend zur Methanrückgewinnung einer nachgeschalteten Rückgewinnungsanlage zugeführt wird. Trotz der aufwändigen und kostenintensiven Reinigungsschritte ist die mittels dieses Verfahrens erreichte CO₂-Reduktion im Hinblick auf eine effiziente Verflüssigung des Produktgases unzureichend. Nachteilig ist zudem, dass im Zuge der diversen Aufbereitungsschritte jeweils ein Teil des im Gasgemisch enthaltenen Biomethans verloren geht (Methanschlupf), wodurch die Effizienz des Verfahrens in Bezug auf eine möglichst hohe Biomethanausbeute verringert wird.

Die vorliegende Erfindung stellt sich daher die Aufgabe, die oben beschriebenen Nachteile des Stands der Technik zu beseitigen und ein verbessertes Verfahren zur Entfernung von CO₂ aus einem methanhaltigen Gasgemisch bereitzustellen, das eine effiziente und effektive Reduktion des CO₂-Gehalts bei gleichzeitiger Minimierung des Methanschlupfes erlaubt.

Die Aufgabe wird erfindungsgemäss mit einem Verfahren gemäss Anspruch 1 und einer Vorrichtung gemäss Anspruch 17 gelöst. Bevorzugte Ausführungsformen der Erfindung sind in den abhängigen Ansprüchen wiedergegeben.

Im erfindungsgemässen Verfahren wird in einem ersten Schritt ein methanhaltiges Gas enthaltend mindestens CO₂ als Verunreinigung bereitgestellt (Schritt a).

In einem zweiten Schritt wird CO₂ mittels Ausfrierens vom Gas abgetrennt (Schritt b).

Anschliessend wird in einem dritten Schritt die CO₂-Konzentration des Gases in einer Trennvorrichtung weiter reduziert, wodurch ein Methan-angereichertes Produktgas erhalten wird (Schritt c).

Vom Produktgas wird anschliessend in einem vierten Schritt mindestens ein Teil als Aufbereitungsgas zur Aufbereitung der Trennvorrichtung durch die Trennvorrichtung geleitet, wodurch CO₂ vom Aufbereitungsgas aufgenommen und mit letzterem aus der Trennvorrichtung entfernt wird (Schritt d).

In einem fünften Schritt wird das im Zuge der Aufbereitung bzw. Regeneration der Trennvorrichtung mit CO₂-beladene Aufbereitungsgas dem methanhaltigen Gas aus dem ersten Schritt a) beigemischt (Schritt e) .

Im Sinne der Erfindung wird als methanhaltiges Gas ein Gas definiert, das Methan als Bestandteil aufweist. Weiter umfasst das Gas neben Methan CO₂ und gewöhnlich auch noch andere Verbindungen (z.B. VOC), welche als Verunreinigungen definiert werden.

Als Methan-angereichertes Produktgas wird im Sinne der Erfindung ein Gas definiert, welches im Vergleich zu dem initial bereitgestellten methanhaltigen Gas eine höhere Methan-Konzentration und eine tiefere CO₂-Konzentration aufweist.

Im Sinne der Erfindung wird als Trennvorrichtung eine Vorrichtung definiert, welche CO₂ aus dem methanhaltigen Gas abtrennt und somit die relative Methan-Konzentration im Gas erhöht.

Als Aufbereitungsgas wird im Sinne der Erfindung ein Gas definiert, welches vom Produktgas oder von einem auf dem Produktgas basierenden Gas abgetrennt wird und zur Aufbereitung der Trennvorrichtung durch die Trennvorrichtung geleitet wird.

Im Sinne der Erfindung wird unter Ausfrieren ein Prozess verstanden, bei welchem die Temperatur eines Gases unter den Druck-abhängigen Sublimationspunkt von CO₂ gekühlt wird. Bei Atmosphärendruck liegt dieser bei -78.5°C.

Es wurde überraschenderweise gefunden, dass durch Verwendung von Produktgas als Aufbereitungsgas zur Aufbereitung der Trennvorrichtung der Energieverbrauch der Trennvorrichtung reduziert werden kann. Konkret kann vermieden werden, dass zur Aufbereitung der Trennvorrichtung ein externes Gas verwendet werden muss.

Weiter wurde überraschenderweise festgestellt, dass durch die Rückführung des Aufbereitungsgases die Effizienz des Verfahrens gesteigert werden kann, da der Ausfrierungsschritt eine zuverlässige Abtrennung eines Grossteils des CO₂ aus dem Gas erlaubt. Gleichzeitig ist der Methanschlupf beim Ausfrieren sehr gering. Die Rückführung des mit CO₂-beladenen Regenerationsgases in das erfindungsgemässe Verfahren vor dem Ausfrierungsschritt entlastet die Trennvorrichtung. Insgesamt können so die Anzahl Trennschritte reduziert und der Methanschlupf des Verfahrens minimiert werden.

Das erfindungsgemässe Verfahren hat somit gegenüber dem Stand der Technik den Vorteil, dass durch den vorgeschalteten Ausfrierungsschritt in Kombination mit der Verwendung des Aufbereitungsgases zur Aufbereitung der Trennvorrichtung letztere deutlich kostengünstiger, energieeffizienter und umweltfreundlicher betrieben werden kann.

Das initiale methanhaltige Gas kann mitunter fermentativ erzeugt werden, beispielsweise in Biogasanlagen, und umfasst bevorzugt Biogas, Deponiegas und/oder Gas aus der Pyrolyse von organischem Material. Weiter bevorzugt kann das Gas auch nicht fermentativen Ursprungs sein, wie beispielsweise in Form von Erdgas, Grubengas oder Flözgas. Das methanhaltige Gas kann auch von einer vorgeschalteten Gasaufbereitungsanlage bereitgestellt werden.

Wie oben erwähnt, wird durch Verringerung des CO₂-Anteils und der damit einhergehenden Erhöhung des Methananteils des methanhaltigen Gases ein methanangereichertes Produktgas bereitgestellt. Von letzterem wird zumindest ein Teil als Aufbereitungsgas durch die Trennanlage geleitet, um letztere zu Regenerieren. Bevorzugt wird das Produktgas vor dem Abtrennen des Aufbereitungsgases verflüssigt. Eine Verflüssigung des Produktgases kann in bekannter Art und Weise durch Kühlung und Kompression erfolgen.

Verflüssigtes Produktgas mit einem hohen Anteil an Methan kann fast überdrucklos bei ca. -160°C gelagert werden. Es ist ebenfalls möglich das verflüssigte Produktgas bei erhöhtem Druck und höherer Temperatur zu lagern.

In einer bevorzugten Ausführungsform wird als Aufbereitungsgas ein Flashgas eingesetzt, das durch Dekomprimieren des verflüssigten Produktgas erhalten wird. Das Flashgas wird als Aufbereitungsgas durch die Trennvorrichtung geleitet.

Durch die Dekomprimierung ist das Produktgas einfacher zu transportieren, da keine Überdrucktanks notwendig sind. Bei der Dekomprimierung wird zudem mindestens ein Teil des verflüssigten Produktgases wieder gasförmig. Dieser Teil wird im Sinne der Erfindung als Flashgas bezeichnet. Bevorzugt handelt es sich bei dem Flashgas also um gekühltes Methanangereichertes Produktgas, welches bevorzugt bei Atmosphärendruck vorliegt. Dieses Flashgas kann im Sinne der Erfindung als Aufbereitungsgas oder als Teil des Aufbereitungsgases zur Aufbereitung der Trennvorrichtung durch diese geleitet werden.

Bevorzugt wird im Zuge der Aufbereitung der Trennvorrichtung CO₂ mittels des Aufbereitungsgases aus der Trennvorrichtung entfernt.

Die Notwendigkeit einer Aufbereitung bzw. Regeneration der Trennvorrichtung ergibt sich dadurch, dass sich das mittels der Trennvorrichtung aus dem methanhaltigen Gas entfernte oder abgetrennte CO₂ üblicherweise in der Trennvorrichtung akkumuliert. Beispielsweise wird im Falle, dass die Trennvorrichtung eine PTSA ist, das methanhaltige Gas in Flussrichtung durch ein Adsorptionsmittel bzw. ein Adsorber geleitet, wobei das Adsorptionsmittel das CO₂ adsorbiert und sich das methanangereicherte Produktgas auf der anderen (stromabwärts gelegenen) Seite des Adsorptionsmittels akkumuliert. Wenn der Adsorber mit CO₂ gesättigt ist, muss das adsorbierte CO₂ vom Adsorber gelöst werden, um diesen für den weiteren Gebrauch wiederaufzubereiten, d.h. zu regenerieren. Für die Regeneration sind mehrere Möglichkeiten bekannt. Üblicherweise kann hierzu entweder der Druck in der PTSA reduziert, das Adsorptionsmittel erwärmt, und/oder das Adsorptionsmittel von einem Aufbereitungsgas in oder entgegen der Flussrichtung des zu reinigenden Gases durchströmt werden. Es sind auch Kombinationen der genannten Regenerationsschritte möglich. Solch ein Regenerationsprozess einer PTSA findet normalerweise in regelmässigen Abständen statt. In der Praxis bedeutet dies, dass die PTSA entweder über mehrere Adsorber bzw. Adsorberbehälter verfügt, welche abwechslungsweise adsorbieren und anschliessend regeneriert werden oder dass die PTSA nicht konstant in Betrieb ist und der Trennprozess in der Regenerationszeit des Adsorbers pausiert wird. Für andere Arten von Trennvorrichtungen - etwa eine cryogene Membran - funktioniert die Regeneration etwas anders, wie weiter unten noch im Detail erklärt werden wird.

Besonders bevorzugt wird das Aufbereitungsgas vor dem Durchleiten durch die Trennvorrichtung entspannt und gegebenfalls erwärmt, da dies die Abgabe von CO₂ in das Aufbereitungsgas begünstigt.

Als erwärmtes Aufbereitungsgas wird im Sinne der Erfindung ein Aufbereitungsgas definiert, welches bevorzugt eine Temperatur von -20 bis 30°C, bevorzugter von -10 bis 20°C und besonders bevorzugt von -5 bis 15°C und ganz besonders bevorzugt von 0 bis 10° aufweist, um das CO₂ möglichst effizient vom Adsorber zu lösen.

In einer konkreten bevorzugten Ausführungsform des erfindungsgemässen Verfahrens umfasst die Trennvorrichtung eine PTSA mit einem Adsorber, welcher in oder entgegen der Flussrichtung des methanhaltigen Gases vom bevorzugt erwärmten Aufbereitungsgas durchströmt wird, nachdem der Druck in der Trennvorrichtung auf den Druck des Aufbereitungsgases reduziert wurde. Das erwärmte Aufbereitungsgas löst das adsorbierte CO₂ vom Adsorber, welcher so regeneriert wird. Anschliessend wird das nun mit CO₂ beladene Aufbereitungsgas aus der Trennvorrichtung geleitet, womit letztere wieder bereit ist, um vom methanhaltigen Gas in Flussrichtung durchströmt zu werden und mittels des regenerierten Adsorbers CO₂ aus dem methanhaltigen Gas zu entfernen.

In einer alternativen bevorzugten Ausführungsform wird ein gekühltes Aufbereitungsgas für die Regeneration der Trennvorrichtung verwendet. Dies ist insbesondere bevorzugt, wenn die Trennvorrichtung eine cryogene Membran umfasst. In diesem Fall wird die Membran in Flussrichtung vom methanhaltigen Gas durchströmt. Im Gegensatz zur PTSA wird das CO₂ von der cryogenen Membran allerdings nicht adsorbiert, sondern es passiert die Membran und akkumuliert sich auf der in Flussrichtung gegenüberliegenden Seite (fluss- oder stromabwärts der Membran - Permeatseite), während das Methan die Membran nicht passieren kann und sich deshalb in Flussrichtung gesehen vor der Membran (stromaufwärts der Membran - Retentatseite) akkumuliert. Die Membran ist insofern bevorzugt semi-permeabel, nämlich permeabel für CO₂ aber nicht permeabel für Methan. Sobald die Konzentration des CO₂ auf der flussabwärts gelegenen Seite der Membran ansteigt, wird der CO₂-Gradient über die Membran reduziert, was den Transport des CO₂ durch die Membran verlangsamt. Um dies zu verhindern, wird das Aufbereitungsgas bevorzugt entlang der cryogenen Membran geleitet, um das sich akkumulierende CO₂ stetig abzutransportieren. Das Aufbereitungsgas ist dabei bevorzugt gekühlt und unter Atmosphärendruck.

Als gekühltes Aufbereitungsgas wird im Sinne der Erfindung ein Aufbereitungsgas definiert, welches bevorzugt eine Temperatur von -130°C bis -80°C, besonders bevorzugt von -120°C bis -100°C und ganz besonders bevorzugt -116°C bis -110°C aufweist, sodass das Aufbereitungsgas das CO₂ abtransportieren kann, ohne die Membran zu erwärmen und so den CO₂-Gradient über die Membran aufrechterhält, wodurch die Abtrennung des CO₂ aus dem methanhaltigen Gas konstant und effizient erfolgen kann.

Wie oben erwähnt, wird das Aufbereitungsgas erfindungsgemäss nach erfolgter Regeneration der Trennvorrichtung zurückgeführt und dem methanhaltigen Gasstrom aus dem ersten Schritt a) des erfindungsgemässen Verfahrens beigemischt oder mit diesem zusammengeführt. Je nach Druck des methanhaltigen Gases wird das Aufbereitungsgas durch Einsatz eines Kompressors bevorzugt auf den gleichen Druck erhöht oder gesenkt, um eine Mischung der beiden Gasströme zu ermöglichen. In der Regel wird dem methanhaltigen Gas in Schritt a) bevorzugt ein Drittel seines Volumens (gemessen als Volumen an zugeführtem methanhaltigen Gas pro Sekunde) als Aufbereitungsgas hinzugefügt. Im Sinne der Erfindung erfolgt dann in einem zweiten Schritt b) die Entfernung von CO₂ aus dem methanhaltigen Gas - welches das zurückgeführte Aufbereitungsgas enthält - mittels Ausfrierens von CO₂.

Im Zuge des Ausfrierens wird das methanhaltige Gas bevorzugt bei einem Druck von 5 bis 25 bar, besonders bevorzugt von 10 bis 20 bar und ganz besonders bevorzugt auf 14 bis 17 (die Angabe "bar" ist hierbei stets als bar (a), also absolut, gegeben) auf -130°C bis -80°C, weiter bevorzugt -120°C bis -100°C, besonders bevorzugt -116°C bis -110°C gekühlt. In einer bevorzugten Ausführungsform wird das methanhaltige Gas zur Kühlung mit einer Oberfläche in Kontakt gebracht, die auf die oben genannten Temperaturbereiche heruntergekühlt wird oder worden ist. Das im methanhaltigen Gas enthaltene CO₂ kristallisiert an dieser Oberfläche aus, so dass an der Oberfläche eine Schicht aus solidem CO₂ - auch bekannt als Trockeneis - gebildet wird. Das Trockeneis wird üblicherweise in regelmässigen Abständen von der Oberfläche entfernt, beispielsweise durch Abkratzen mittels eines Schabers, sodass neues CO₂ an der gekühlten Oberfläche auskristallisieren kann.

Durch den Ausfrierungsschritt wird der CO₂ Gehalt des methanhaltigen Gases (inkl. beigemischten Aufbereitungsgas) bevorzugt auf unter 6000 ppm reduziert. Eine weitere Reduktion des CO₂-Gehalts des methanhaltigen Gases wird erfindungsgemäss in der nachgeschalteten Trennvorrichtung erreicht. Das Ausfrieren von CO₂ hat generell den Vorteil, dass mit relativ geringem Aufwand eine grosse Menge an CO₂ aus dem Gas entfernt werden kann. In der Regel ist auch der Wartungsaufwand einer entsprechenden Ausfrierungseinheit gegenüber anderen Trennvorrichtungen, etwa einer PTSA, geringer. Neben CO₂ können im Zuge des Ausfrierens auch andere Verunreinigungen aus dem methanhaltigen Gas entfernt werden. Ein weiterer Vorteil ist, dass durch den Prozess des Ausfrierens kein Methan verloren geht, da Methan bei den oben angegebenen bevorzugten Temperaturen nicht an der Oberfläche kondensiert. Mittels Ausfrierens von CO₂ kann insofern ohne Methanverlust die Methankonzentration im methanhaltigen Gas gesteigert werden. Je nachdem, ob und in welcher Konzentration zusammen mit dem CO₂ weitere Verunreinigungen an der Oberfläche kondensieren, kann das ausgefrorene CO₂ anschliessend in die Umwelt entlassen oder als Trockeneis zur Kühlung verwendet werden.

Bevorzugt wird in der Trennvorrichtung die CO₂-Konzentration des methanhaltigen Gases auf unter 5200 ppm, bevorzugt auf unter 830 ppm, bevorzugter auf unter 215 ppm, besonders bevorzugt auf unter 100 ppm und ganz besonders bevorzugt auf unter 50 ppm gesenkt.

Eine tiefe CO₂-Konzentration im Produktgas ist insbesondere im Hinblick auf eine Verflüssigung des Produktgases bevorzugt, da dies ein Ausfrieren von CO₂ in Ventilen oder Rohrleitungen verhindert. Für das Produktgas wird bei Atmosphärendruck ganz besonders bevorzugt eine CO₂-Konzentration von maximal 50 ppm angestrebt, da CO₂ in diesen Konzentrationen bei Temperaturen unter -162°C im verflüssigten Produktgas gelöst bleibt und nicht auskristallisiert. Falls der Druck im Produktgas höher ist als Atmosphärendruck kann die CO₂-Konzentration auch höher sein.

Eine tiefe CO₂-Konzentration im Produktgas hat für die weitere Verwendung des Produktgases zusätzliche Vorteile: Ab einer gewissen CO₂-Konzentration im Produktgas kann es sein, dass bei der Dekomprimierung des verflüssigten Produktgases CO₂ auskristallisiert, und dieses entfernt werden muss - beispielsweise mittels Aussiebens.

Bevorzugt wird zumindest ein Teil des Produktgases aus dem dritten Schritt c) oder zumindest ein Teil des mit CO₂ beladenen Aufbereitungsgases aus dem vierten Schritt d) zur Kühlung des methanhaltigen Gases im zweiten Schritt b) (Ausfrierungsschritt) verwendet. Bevorzugt wird zu diesem Zweck das Produktgas oder das Aufbereitungsgas und das methanhaltige Gas, vorzugsweise im Gegenstromprinzip, durch einen Wärmetauscher geleitet.

Das Produktgas aus dem dritten Schritt c) (und insofern auch der vom Produktgas abgetrennte Teil, der als Aufbereitungsgas genutzt wird) bevorzugt eine Temperatur von -162°C bis -130°C, während das methanhaltige Gas aus dem ersten Schritt a) bevorzugt eine Temperatur von 0°C bis 40°C aufweist. Durch den Wärmeaustausch wird das Produktgas oder das Aufbereitungsgas erwärmt und gleichzeitig das methanhaltige Gas gekühlt. Bevorzugt wird dabei das Produkt- oder Aufbereitungsgas auf eine Temperatur von unter bevorzugt von -20 bis 30°C, bevorzugter von -10 bis 20°C, besonders bevorzugt von -5 bis 15°C und ganz besonders bevorzugt von 0 bis 10°C erwärmt, während das methanhaltige Gas bevorzugt auf unter 10°C, bevorzugter auf unter 0°C und besonders bevorzugt auf unter -30°C gekühlt wird. Das gekühlte methanhaltige Gas aus dem Wärmetauscher wird für das nachfolgende Ausfrieren (im zweiten Schritt b)) in der Regel weiter gekühlt. Der vorgängige Energieaustausch zwischen dem Aufbereitungs- oder Produktgas und dem methanhaltigen Gas ermöglicht es den Energiebedarf zum Kühlen des methanhaltigen Gases zu verringern, wodurch die Gasaufbereitung effizienter und wirtschaftlicher betrieben werden kann.

In einer bevorzugten Ausführungsform ist die Trennvorrichtung eine PTSA und für die Entfernung von CO₂ aus der Trennvorrichtung wird das erwärmte Produktgas aus dem Wärmetauscher als Aufbereitungsgas genutzt. Gegebenenfalls wird das erwärmte Produktgas vor dem Durchleiten durch die Trennvorrichtung in der Regel bevorzugt auf einen Druck von 1 bar dekomprimiert.

Wie weiter oben bereits erklärt wird das CO₂ bei der Verwendung einer PTSA als Trennvorrichtung von einem Adsorptionsmittel bzw. einem Adsorber (meist Zeolithe oder Kohlenstoffmolekularsiebe) adsorbiert bzw. gebunden. Nachdem das Adsorptionsmittel gesättigt ist, muss es regeneriert oder ausgetauscht werden, um die PTSA wieder funktionsbereit zu machen. Eine Regeneration des Adsorptionsmittels kann wie vorstehend beschrieben beispielsweise durch Erwärmen und/oder Entspannung des Adsorptionsmittels erzielt werden. Der Regenerationsprozess kann beschleunigt werden, wenn das Aufbereitungsgas das Adsorptionsmittel entgegen der Flussrichtung des methanhaltigen Gases durchströmt. Die Kombination aus erwärmtem und entspanntem Aufbereitungsgas, welches das Adsorptionsmittel erwärmt, um das CO₂ zu lösen und gleichzeitig das Adsorptionsmittel durchströmt, um das gelöste CO₂ abzutransportieren, hat sich für die Regeneration der PTSA als sehr effizient erwiesen. Im Hinblick auf eine möglichst energieeffizientes Verfahren wird keine externe Energie für die Erwärmung des Aufbereitungsgases verwendet, sondern die Erwärmung erfolgt über den Wärmeaustausch zwischen dem "kalten" Produktgas und dem "warmen" methanhaltigen Gas im Wärmetauscher. Das aus dem Wärmetauscher austretende erwärmte Produktgas wird dann zur Regeneration der PTSA in die PTSA weitergeleitet.

Wie vorstehend beschrieben wird die PTSA regeneriert, indem beispielsweise das Adsorptionsmittel erwärmt wird. Nach der Regeneration des Adsorptionsmittels mittels eines erwärmten Aufbereitungsgases muss das regenerierte Adsorptionsmittel allerdings wieder gekühlt werden, um die CO₂-Moleküle effizient zu adsorbieren. Diese Kühlung kann mittels eines Teils des Produktgases aus Schritt c) erfolgen. Das Produktgas hat bei seiner Bereitstellung nach der CO₂-Entfernung in der Trennvorrichtung bevorzugt eine Temperatur von -130°C bis -80°C, besonders bevorzugt von -120°C bis -100°C und ganz besonders bevorzugt -116°C bis -110°C. Während ein Teil des Produktgases - bevorzugt im vorstehend beschriebenen Wärmetauscher - auf vorzugsweise -20 bis 30°C, bevorzugter -10 bis 20°C und besonders bevorzugt -5 bis 10°C, aufgewärmt wird und anschliessend als erwärmtes Aufbereitungsgas durch das Adsorptionsmittel geleitet wird, kann ein weiterer Teil des Produktgases aus Schritt c) mit seiner ursprünglichen Temperatur von bevorzugt -130°C bis -80°C, besonders bevorzugt von -120°C bis -100°C und ganz besonders bevorzugt -116°C bis -110°C dazu genutzt werden, um das Adsorptionsmittel der PTSA nach der Regeneration wieder auf Betriebstemperatur zu kühlen. Somit kann eine Kühlung des Adsorptionsmittels der PTSA mittels einer externen Kältequelle verhindert werden, was Energie und Kosten spart.

Wie bereits an mehreren Stellen erwähnt, kann die Trennvorrichtung anstelle eines Adsorptionsmittels (in einer PTSA) auch eine cryogene Membran umfassen. Eine cryogene Membran hat gegenüber anderen Trennvorrichtungen wie beispielweise einer PTSA den Vorteil, dass sie kein zu regenerierendes Adsorptionsmittel umfasst, sondern bei Abführen des die Membran passierenden CO₂ ununterbrochen betrieben werden kann. Wie weiter oben beschrieben, ist die cryogene Membran permeabel für CO₂, nicht jedoch für Methan, wodurch sich das CO₂ auf der in Flussrichtung stromabwärts liegenden Seite (Permeatseite) der cryogenen Membran ansammelt. Die Geschwindigkeit des Transfers von CO₂ durch die Membran ist somit vom CO₂-Gradient über die Membran abhängig und je grösser der Gradient desto schneller findet der Transport von CO₂ durch die Membran statt. Wird das CO₂ auf der in Flussrichtung stromabwärts liegenden Seite (Permeatseite) der Membran stetig abtransportiert, bleibt der Gradient konstant hoch und die Konzentration von CO₂ im methanhaltigen Gas kann stetig gesenkt werden. Da eine cryogene Membran keine beweglichen Teile und kein aufzubereitendes Adsorptionsmittel umfasst, ist sie weniger aufwändig in der Wartung und somit einfacher und günstiger zu betreiben als andere Trennvorrichtungen. Wie oben beschrieben kann zum Abtransport des CO₂ bevorzugt das Aufbereitungsgas aus dem vierten Schritt d) genutzt und das infolgedessen mit CO₂ beladene Aufbereitungsgas anschliessend mit dem methanhaltigen Gas aus dem ersten Schritt a) gemischt werden, sodass kein Methan verloren geht.

Im Falle einer cryogenen Membran wird das Aufbereitungsgas zum Abtransport von CO₂ bevorzugt direkt nach dessen Abzweigung vom Produktgas - also ohne vorgängige Erwärmung - durch die Trennvorrichtung geleitet. Das Aufbereitungsgas wird anschliessend durch den oben erwähnten Wärmetauscher geleitet, um das methanhaltige Gas zu kühlen. Danach wird das Aufbereitungsgas komprimiert und mit dem methanhaltigen Gas aus Schritt a) gemischt.

Unabhängig von der Art der Trennvorrichtung wird das methanhaltige Gas vor dessen Zufuhr zur Trennvorrichtung bevorzugt auf 5 bis 25 bar, besonders bevorzugt auf 10 bis 20 bar und ganz besonders bevorzugt auf 14 bis 17 bar komprimiert.

Bei den genannten bevorzugten Druckbedingungen ist eine Abtrennung von CO₂ aus dem methanhaltigen Gas sowohl mit einer PTSA als auch mit einer cryogenen Membran als Trennvorrichtung besonders effizient.

In einer bevorzugten Ausführungsform wird das methanhaltige Gas der Trennvorrichtung mit einer Temperatur von -130°C bis -80°C, besonders bevorzugt von -120°C bis -100°C und ganz besonders bevorzugt -116°C bis -110°C, zugeführt.

Bei den oben beschriebenen Temperaturen ist eine Abtrennung von CO₂ aus dem methanhaltigen Gas sowohl mit einer PTSA als auch mit einer cryogenen Membran als Trennvorrichtung besonders effizient.

Bevorzugt wird das Produktgas zur Verflüssigung auf -140°C bis -100°C, bevorzugt -130°C bis -110°C und besonders bevorzugt -125 bis -115°C gekühlt. Diese Temperaturen sind in Kombination mit einem Druck von 15 bar bevorzugt. Die 15 bar entsprechen dem bevorzugten Druck des Produktgases bei dessen Erhalt nach der CO₂-Abtrennung in der Trennvorrichtung.

Das mittels des erfindungsgemässen Verfahrens erhaltene methanangereicherte Produktgas - oder zumindest ein Teil davon - wird bevorzugt verflüssigt, um dessen Transport und/oder Lagerung zu vereinfachen. Um das methanangereichertes Produktgas zu verflüssigen kann entweder die Temperatur reduziert oder der Druck erhöht werden. Da eine Druckerhöhung des kalten Produktgases sehr aufwändig ist, wird das Produktgas bevorzugt mittels Temperaturreduktion verflüssigt. Vorzugsweise wird auf die oben genannten Temperaturen gekühlt, um das Produktgas zu verflüssigen.

Nach der Verflüssigung kann das verflüssigte methanangereicherte Produktgas im Hinblick auf einen erleichterten Transport bzw. eine vereinfachte Lagerung dekomprimiert werden. In einer bevorzugten Ausführungsform wird das verflüssigte methanangereicherte Produktgas - vor dem Abzweigen eines Teils des Produktgases zur Nutzung als Aufbereitungsgas - auf bevorzugt 1 bar dekomprimiert. Weiter kann auch ein noch nicht verflüssigtes Produktgas durch die Dekomprimierung verflüssigt werden, da sich das Produktgas bei der Dekomprimierung weiter abkühlt. Bei der Dekomprimierung der Flüssigkeit entsteht bevorzugt ein sogenanntes "Flashgas", da ein Teil der Flüssigkeit wieder gasförmig wird. Wie vorstehend beschrieben wird dieses Flashgas bevorzugt als Aufbereitungsgas verwendet, um das erfindungsgemässe Verfahren besonders effizient zu machen. Es ist jedoch ebenfalls denkbar, dass das Aufbereitungsgas direkt vor der Verflüssigung vom Produktgas abgetrennt wird, also ohne vorangehende Verflüssigung und Dekomprimierung mit dem damit einhergehenden Erhalt eines Flashgases.

Bevorzugt weist das methanhaltige Gas im ersten Schritt a) eine CO₂-Konzentration bis zu 60%, bevorzugt bis zu 6% und besonders bevorzugt bis zu 2,5% auf. Die CO₂-Konzentration bezieht sich hier auf den Zeitpunkt vor der Beimischung des CO₂-beladenen Aufbereitungsgases.

Mit dem erfindungsgemässen Verfahren ist es möglich methanhaltige Gasmischungen mit einem CO₂-Anteil von bis zu 60% aufzureinigen, auch wenn dies aus wirtschaftlicher Sicht wenig sinnvoll ist. Daher wird bevorzugt ein möglichst tiefer CO₂-Anteil angestrebt, um den Aufreinigungsaufwand möglichst gering und effizient zu halten.

In einem weiteren Aspekt betrifft die Erfindung eine Vorrichtung zur Durchführung des oben beschriebenen Verfahrens zur Entfernung von CO₂ aus einem Methan-angereicherten Gas. Besagte Vorrichtung umfasst eine Gaseinspeiseleitung, eine Kompressionseinheit, mindestens eine Kühleinheit zum Ausfrieren von CO₂, eine Trennvorrichtung, eine Leitung zum Abtransport eines Methan-angereichertem Produktgases und eine Aufbereitungsgasleitung, welche die Trennvorrichtung und die Gaseinspeiseleitung verbindet.

Die erfindungsgemässe Vorrichtung hat gegenüber bekannten Vorrichtungen aus dem Stand der Technik den Vorteil, dass die Aufbereitungsgasleitung, welche die Trennvorrichtung und die Gaseinspeiseleitung verbindet, dazu genutzt werden kann, das in der Trennvorrichtung entfernte CO₂ wieder in die Gaseinspeiseleitung einzuspeisen, um es anschliessend zu einem Grossteil durch Ausfrieren abzutrennen. Aus diesem Grund ist eine solche Vorrichtung sehr effizient in der Entfernung von CO₂ aus einem methanhaltigen Gas, wodurch ein methanangereichertes Produktgas erhalten werden kann.

Im Folgenden wird die Erfindung anhand von der beigefügt dargestellten Ausführungsbeispiele näher erläutert. Es zeigen jeweils rein schematisch:
- Fig. 1: eine schematische Darstellung einer bevorzugten Ausführungsform des erfindungsgemässen Verfahrens zur Entfernung von CO₂ aus einem methanhaltigen Gas mit einer PTSA; und
- Fig. 2: eine schematische Darstellung einer bevorzugten Ausführungsform des erfindungsgemässen Verfahrens Entfernung von CO₂ aus einem methanhaltigen Gas mit einer cryogenen Membran.

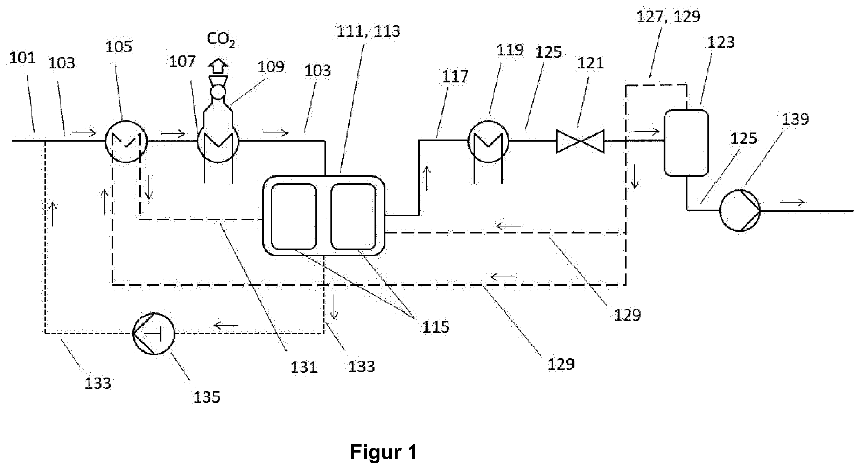

Bei der in Fig. 1 schematisch dargestellten bevorzugten Ausführungsform des erfindungsgemässen Verfahrens wird in einem ersten Schritt aus einer Gaseinspeiseleitung 101 ein methanhaltiges Gas 103 enthaltend mindestens CO₂ als Verunreinigung bereitgestellt.

Das methanhaltige Gas 103 wird mit einem Druck von 15 bar bereitgestellt und in einem zweiten Schritt in einem ersten Wärmetauscher 105 auf eine Temperatur T_{G} (Temperatur gasförmig) von -32°C runtergekühlt. Das komprimierte und gekühlte methanhaltige Gas 103 wird weiter in einem zweiten Wärmetauscher 107 weiter auf eine Temperatur T_{F} (Temperatur Freeze) von -114°C runtergekühlt, bei welcher das im methanhaltigen Gas 103 enthaltene CO₂ in einer Schleuse 109 des Wärmetauschers an einer nicht dargestellten Oberfläche ausfriert und in regelmässigen Abständen von besagter Oberfläche abgekratzt oder auf andere Weise entfernt wird. Das Ausfrieren erlaubt eine rasche Entfernung grosser Mengen von CO₂ aus dem methanhaltigen Gas 103, wodurch die CO₂-Konzentration im Gas 103 auf unter 2100 ppm gesenkt werden kann. Das methanhaltige (und nun im CO₂-Gehalt reduzierte) Gas 103 wird anschliessend einer Trennvorrichtung 111, hier eine PTSA 113, zugeführt. Die PTSA 113 umfasst in der Regel mehrere Adsorberbehälter 115 (hier lediglich zwei dargestellt), welche parallel, überlappend oder im Wechsel zueinander betrieben werden.

Nach Zuführung des methanhaltigen Gases 103 zur Trennvorrichtung 111 wird in einem dritten Schritt das restliche CO₂ durch Adsorption an einem in der Trennvorrichtung 111 vorhandenen Adsorber 115 aus dem methanhaltigen Gas 103 entfernt, sodass ein Methan-angereichertes Produktgas 117 erhalten wird. Das Methan-angereicherte Produktgas 117 hat nach der Aufreinigung durch die Trennvorrichtung 111 einen CO₂-Gehalt von bevorzugt maximal 215 ppm. Das Methan-angereicherte Produktgas 117 wird zu einem dritten Wärmetauscher 119 transportiert, auf -120°C gekühlt, dabei verflüssigt und über ein Ventil 121 in einen Flashbehälter 123 auf 1 bar, bevorzugt Atmosphärendruck, dekomprimiert, wodurch es auf bevorzugt -162°C abkühlt und gleichzeitig ein Teil wieder gasförmig wird. Neben einem verflüssigten Produktgas 125 entsteht in der Regel ein Flashgas 127, also ein Teil des Produktgases 117 bleibt gasförmig oder ein Teil des verflüssigten Produktgases 125 wird wieder gasförmig. Das Flashgas 127 wird im hier dargestellten Verfahren als Aufbereitungsgas 129 (gestrichelte Linie) verwendet. Das Aufbereitungsgas 129 aus dem Flashbehälter 123 hat einen CO₂-Gehalt von bevorzugt unter 215 ppm und eine Temperatur von bevorzugt -162 °C. Das Aufbereitungsgas 129 (entspricht in seiner Zusammensetzung dem Produktgas 117) wird einerseits zurück zum ersten Wärmetauscher 105 geleitet, um das methanhaltige Gas 103 zu kühlen. Dabei erwärmt es sich bevorzugt auf 0°C. Das nun erwärmte Aufbereitungsgas 131 wird zur PTSA 113 geleitet, wo es die gesättigten Adsorber 115 erwärmt und durchströmt, um das CO₂ aus den Adsorbern 115 zu lösen. Ein nun mit CO₂-angereichertes Aufbereitungsgas 133 (gepunktete Linie) wird von der PTSA 113 zu einem Kompressor 135 transportiert, wo es auf 15 bar - also den Ausgangsdruck des methanhaltigen Gases 101, komprimiert wird.

Anschliessend wird das CO₂-angereicherte Aufbereitungsgas 133 zur Gaseinspeiseleitung 101 transportiert und dort mit dem methanhaltigen Gas 103 gemischt. Nachdem die Adsorber 115 der PTSA 113 wiederaufbereitet wurden, werden sie mit dem -162°C kalten Aufbereitungsgas 129 wieder auf Betriebstemperatur gekühlt, um effizient CO₂ aus dem methanhaltigen Gas 103 zu adsorbieren zu können.

Das verflüssigte Produktgas 125 wird mit einer Pumpe 139 dem Verbraucher zur Verfügung gestellt. Da die beiden gezeigten Adsorber 115 der PTSA 113 im Wechsel zueinander betrieben werden können, kann der eine Adsorber 115 aufbereitet werden, während der andere Adsorber 115 CO₂ aus dem methanhaltigen Gas 103 adsorbiert. Somit kann ein konstanter Aufreinigungsprozess gewährleistet werden.

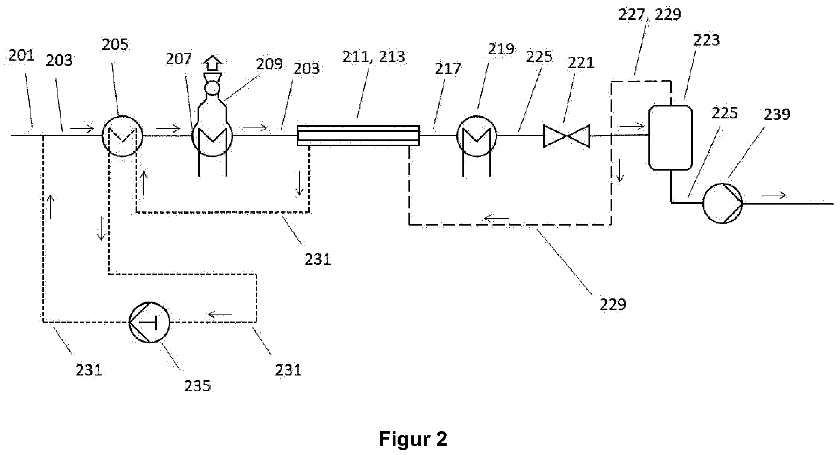

Bei der in Fig. 2 schematisch dargestellten alternativen Ausführungsform des erfindungsgemässen Verfahrens wird in einem ersten Schritt aus einer Gaseinspeiseleitung 201 ein methanhaltiges Gas 203 enthaltend mindestens CO₂ als Verunreinigung für das weitere Verfahren bereitgestellt. Das methanhaltige Gas 203 wird mit einem Druck von 15 bar bereitgestellt und in einem zweiten Schritt in einem ersten Wärmetauscher 205 auf eine Temperatur T_{G} (Temperatur gasförmig) von -32°C runtergekühlt. Das komprimierte und gekühlte methanhaltige Gas 203 wird weiter in einem zweiten Wärmetauscher 207 weiter auf eine Temperatur T_{F} (Temperatur Freeze) von -114 °C runtergekühlt. Bei -114 °C friert das im methanhaltigen Gas 203 gelöste CO₂ in einer Schleuse 209 an einer gekühlten Oberfläche (nicht dargestellt) aus - das heisst, es kondensiert an besagter Oberfläche - und wird von dieser regelmässig abgekratzt oder auf andere Weise entfernt. Nach dem Ausfrieren hat das methanhaltige Gas 203 in der Regel eine CO₂-Konzentration von unter 2100 ppm. Das methanhaltige Gas 203 wird anschliessend zu einer Trennvorrichtung 211, hier als cryogene Membran 213 ausgebildet, transportiert. In einem dritten Schritt wird in der Trennvorrichtung 211 das restliche CO₂ aus dem methanhaltige Gas 203 abgetrennt, sodass ein Methan-angereichertes Produktgas 217 bereitgestellt wird. Bei der in Fig. 2 dargestellten Ausführungsform diffundiert das im methanhaltigen Gas 203 enthaltene CO₂ durch die cryogene Membran 213, während das Methan die cryogene Membran 213 aufgrund deren Selektivität (semi-permeabel) nicht passieren kann. Somit akkumuliert sich vor (stromaufwärts) der cryogenen Membran 213 das Methan und auf der gegenüberliegenden Seite (stromabwärts) der cryogenen Membran 213 das CO₂. Das so auf der stromaufwärtsgelegenen Seite der Membran 213 zurückbehaltene Methan-angereicherte Produktgas 217 hat nach der Aufreinigung durch die cryogene Membran 213 einen CO₂-Gehalt von bevorzugt maximal 215 ppm. Das Methan-angereicherte Produktgas 217 wird zu einem dritten Wärmetauscher 219 transportiert und auf -120°C gekühlt, dabei verflüssigt und über ein Ventil 221 in einen Flashbehälter 223 auf Atmosphärendruck dekomprimiert, wodurch es auf bevorzugt -162°C abkühlt und gleichzeitig ein Teil wieder gasförmig wird. Neben einem verflüssigten Produktgas 225 entsteht in der Regel ein Flashgas 227, denn ein Teil des Produktgases 217 bleibt meist gasförmig oder ein Teil des bereits verflüssigten Produktgases 225 wird im Sinne eines Gleichgewichts wieder gasförmig. Das Flashgas 227 wird hier als Aufbereitungsgas 229 (gestrichelte Linie) verwendet. Das Aufbereitungsgas 229 aus dem Flashbehälter 223 hat einen CO₂-Gehalt von bevorzugt unter 215 ppm und eine Temperatur von bevorzugt -162°C. Das Aufbereitungsgas 229 wird zur cryogenen Membran 213 geleitet, wo es das akkumulierte CO₂ aufnimmt. So entsteht ein kaltes (-113°C), mit im Vergleich zum Produktgas CO₂-angereichertes Aufbereitungsgas 231 (>2100ppm CO₂) (gepunktete Linie). Durch die Aufnahme des CO₂ und dessen Abtransport wird ein konstant hoher CO₂ Gradient über die Membran 213 erreicht, wodurch das CO₂ aus dem methanhaltigen Gas 203 vereinfacht durch die Membran 213 diffundieren kann, da die Konzentration auf der Seite des Aufbereitungsgases 229 konstant tiefer ist als auf der Seite des Produktgases 217. Das -113°C kalte, mit CO₂ angereicherte Aufbereitungsgas 231 wird zum ersten Wärmetauscher 205 transportiert, wo es Kälte an das methanhaltige Gas 203 abgibt und sich dabei selbst auf +5 °C erwärmt. Vom ersten Wärmetauscher 205 wird das mit CO₂-angereicherte Aufbereitungsgas 231 zu einem Kompressor 235 transportiert, wo es auf 15 bar komprimiert wird. Anschliessend wird das CO₂-angereicherte, komprimierte Aufbereitungsgas 231 zur Gaseinspeiseleitung 201 transportiert und dort mit dem methanhaltigen Gas 203 gemischt.

Das verflüssigten Produktgas 225 wird mit einer Pumpe 239 dem Verbraucher zur Verfügung gestellt. Da die cryogene Membran 213 durch den Abtransport des CO₂ mit dem Aufbereitungsgas 229 konstant aufbereitet wird, kann diese ohne Unterbruch betrieben werden, solang der CO₂-Gradient über der Membran 213 eine Diffusion des CO₂ durch die Membran 213 zulässt.

## Patentansprüche

1. Verfahren zur Entfernung von CO₂ aus einem methanhaltigen Gas umfassend die Schritte:
a) Bereitstellen eines methanhaltigen Gases (103, 203) enthaltend mindestens CO₂ als Verunreinigung;
b) Abtrennen von CO₂ aus dem methanhaltigen Gas (103, 203) aus Schritt a) mittels Ausfrierens;
c) Weitere Reduktion der CO₂-Konzentration des methanhaltigen Gases (103, 203) aus Schritt b) mittels einer Trennvorrichtung (111, 211), wodurch ein Methanangereichertes Produktgas (117, 217) erhalten wird;
d) Verwendung von mindestens eines Teils (127, 227) des Produktgases (117, 217) aus Schritt c) als Aufbereitungsgas (129, 229), welches zur Aufbereitung der Trennvorrichtung (111, 211) durch die Trennvorrichtung (111, 211) geleitet wird, wodurch CO₂ vom Aufbereitungsgas (129, 229) aufgenommen und mit dem Aufbereitungsgas (129, 229) aus der Trennvorrichtung (111, 211) entfernt wird; und
e) Rückführen des durch die Trennvorrichtung (111, 211) geleiteten Aufbereitungsgases (129, 229) und Beimischen zum methanhaltigen Gas (103, 203) in Schritt a).

2. Verfahren gemäss Anspruch 1, **dadurch gekennzeichnet, dass** vor Schritt d) das Produktgas (117, 217) durch Kühlung verflüssigt wird.

3. Verfahren gemäss Anspruch 2, **dadurch gekennzeichnet, dass** das verflüssigte Produktgas (125, 225) dekomprimiert wird wodurch ein Flashgas (127, 227) erhalten wird und dieses als Aufbereitungsgas (129, 229) durch die Trennvorrichtung (111, 211) geleitet wird.

4. Verfahren gemäss einem der Ansprüche 1 bis 3, **dadurch gekennzeichnet, dass** im Zuge der Aufbereitung der Trennvorrichtung (111, 211) in Schritt d) mittels des Aufbereitungsgases (129, 229), bevorzugt mittels eines entspannten und gegebenfalls erwärmten Aufbereitungsgases (131, 231), CO₂ aus der Trennvorrichtung (111, 211) entfernt wird.

5. Verfahren gemäss einem der Ansprüche 1 bis 4, **dadurch gekennzeichnet, dass** in Schritt b) die CO₂-Konzentration des Gases (103, 203) auf unter 6000 ppm reduziert wird.

6. Verfahren gemäss einem der Ansprüche 1 bis 5, **dadurch gekennzeichnet, dass** in Schritt c) die CO₂-Konzentration des Produktgases (117, 217) auf unter 5200 ppm, bevorzugt auf unter 830 ppm, bevorzugter auf unter 215 ppm, besonders bevorzugt auf unter 100 ppm und ganz besonders bevorzugt auf unter 50 ppm gesenkt wird.

7. Verfahren gemäss einem der Ansprüche 4 bis 6, **dadurch gekennzeichnet, dass** das zurückgeführte Aufbereitungsgas (133, 233) vor dessen Beimischung zum methanhaltigen Gas (103, 203) in Schritt a) auf den Druck des methanhaltigen Gases (103, 203) komprimiert wird.

8. Verfahren gemäss einem der Ansprüche 1 bis 7, **dadurch gekennzeichnet, dass** mindestens ein Teil des Aufbereitungsgases (129, 231) aus Schritt d) oder ein Teil des Produktgases (117, 217) aus Schritt c) zur Kühlung des methanhaltigen Gases (103, 203) aus Schritt a) verwendet wird, bevorzugt indem das Aufbereitungsgas (129, 231) oder das Produktgas (117, 217) und das methanhaltige Gas, vorzugsweise im Gegenstromprinzip, durch einen Wärmetauscher geleitet werden.

9. Verfahren gemäss den Ansprüchen 4 und 8, **dadurch gekennzeichnet, dass** die Trennvorrichtung (111) eine PTSA (113) ist und für die Regeneration der Trennvorrichtung (111) das erwärmte Produktgas (117) aus dem Wärmetauscher als Aufbereitungsgas durch die Trennvorrichtung geleitet wird.

10. Verfahren gemäss einem der Ansprüche 1 bis 9, **dadurch gekennzeichnet, dass** die Trennvorrichtung (111) eine PTSA (113) ist und mindestens ein Teil des Produktgases (117) aus Schritt c) zur Kühlung der PTSA (113) nach deren Regeneration genutzt wird.

11. Verfahren gemäss einem der Ansprüche 1 bis 8, **dadurch gekennzeichnet, dass** die Trennvorrichtung (211) eine cryogene Membran (213) umfasst.

12. Verfahren gemäss einem der Ansprüche 1 bis 11, **dadurch gekennzeichnet, dass** das methanhaltige Gas (103, 203) der Trennvorrichtung (111, 211) mit einem Druck von 5 - 25 bar, bevorzugt 10 - 20 bar und besonders bevorzugt 14 - 17 bar, zugeführt wird.

13. Verfahren gemäss Anspruch 12, **dadurch gekennzeichnet, dass** das methanhaltige Gas (103, 203) der Trennvorrichtung (111, 211) mit einer Temperatur von -130°C bis -80°C, bevorzugt -120°C bis -100°C, besonders bevorzugt -116°C bis -110°C, zugeführt wird.

14. Verfahren gemäss einem der Ansprüche 1 bis 13, **dadurch gekennzeichnet, dass** das Produktgas (117, 217) zur Verflüssigung auf -140°C bis -100°C, bevorzugt -130°C bis -110°C und besonders bevorzugt -125 bis -115°C gekühlt und ganz oder zumindest teilweise verflüssig wird.

15. Verfahren gemäss einem der Ansprüche 1 bis 14, **dadurch gekennzeichnet, dass** das Produktgas bzw. das verflüssigte Produktgas (117, 217) vor der Abzweigung des Aufbereitungsgases auf bevorzugt 1 bar dekomprimiert wird.

16. Verfahren gemäss einem der Ansprüche 1 bis 15, **dadurch gekennzeichnet, dass** das methanhaltige Gas (101, 201) in Schritt a) eine CO₂-Konzentration bis zu 60%, bevorzugt bis zu 6% und besonders bevorzugt bis zu 2,5% aufweist.

17. Vorrichtung zur Durchführung eines Verfahrens zur Entfernung von CO₂ aus einem Methan-angereicherten Gas gemäss einem der Ansprüche 1 bis 16, umfassend eine Gaseinspeiseleitung, eine Kompressionseinheit (135, 235), mindestens eine Kühleinheit zum Ausfrieren von CO₂, eine Trennvorrichtung (111, 211), eine Leitung zum Abtransport eines Methan-angereichertem Produktgases und eine Aufbereitungsgasleitung, welche die Trennvorrichtung und die Gaseinspeiseleitung verbindet.
